# EUROPÄISCHE PATENTANMELDUNG

(11) **EP 3 476 225 A1**
(43) Veröffentlichungstag der Anmeldung: **01.05.2019**
(21) Anmeldenummer: 18000828.6
(22) Anmeldetag: 25.10.2018
(51) Int. Cl.: A23J 3/14, A23J 3/22, A23P 30/20, A23L 33/21, A23L 25/00

(54) **BEARBEITUNG EINES PRESSKUCHENS UND/ODER PULVERS AUS ÖIHALTIGEN SAATEN**

(30) Priorität: 30.10.2017 DE 102017010083
(71) Anmelder: Schein, Christian, 49328 Melle-Buer (DE)
(72) Erfinder: Schein, Christian, 49328 Melle-Buer (DE)
(74) Vertreter: Busse, Harald F.W.

(57) **Zusammenfassung**

Ein Verfahren zur Bearbeitung eines Preßkuchens, eines Extraktionsschrots und/oder Pulvers (P.1) aus Anteilen aus ölhaltigen Saaten (S.1) wie etwa Senf, Crambe, Sonnenblume, Kürbiskerne, Hanf, Lein oder Raps, wird so ausgeführt, daß das Material des Preßkuchens oder Pulvers (P.1) einer Erhitzung und einer Texturierung zur Ausbildung eines faserhaltigen Nahrungsmittels (P.5) unterzogen wird.

## Beschreibung

Die Erfindung betrifft ein Verfahren zur Bearbeitung eines Preßkuchens oder Pulvers aus Anteilen aus ölhaltigen Saaten wie etwa Senf, Crambe, Sonnenblume, Kürbiskerne, Sesam, Hanf, Lein oder Raps, insbesondere Rapssamen, nach dem Oberbegriff des Anspruchs 1 sowie ein Lebensmittel nach dem Oberbegriff des Anspruchs 13.

Es ist bekannt, ölhaltige Samen durch Pressung zur Ölgewinnung und/oder zum Erhalt eines Preßkuchens für die Ernährung von Tieren oder Menschen zu verwenden. Aus der DE 199 37 081 C1 ist weiter bekannt, etwa Rapskörner vor ihrem Pressen zu schälen und die Kern- und Schalenanteile voneinander zu trennen. Dadurch ist nicht nur die Qualität des aus den Kernanteilen gewonnenen Öls durch die Entfernung antrinutiver Inhaltsstoffe der Schalen verbessert, sondern ebenso ist auch die Qualität eines ggf. aus den Kernanteilen gewonnenen Rapskuchens aufgrund der Abtrennung von Rohfaser verbessert. Der nach der Auspressung von Öl entstandene Preßkuchen ist proteinhaltig und hat insofern einen hohen Wert für die Ernährung von Menschen oder Tieren. Jedoch hat der Preßkuchen eine harte, poröse, bröckelnde Struktur und ist daher ohne weiteres nicht als Humanlebensmittel geeignet. Daher gibt es Verfahren, derartige Preßkuchen als Rohstoff für eine nachfolgende Proteinkonzentration oder Proteinisolation zu nutzen, um so das enthaltene Protein konzentrieren und in später entstehende Lebensmittel einbauen zu können. Derartige Verfahren sind jedoch energetisch und vom Wasserverbrauch sehr aufwendig.

Der Erfindung liegt das Problem zugrunde, die Nutzung eines Preßkuchens (Expellers) oder Extraktionsschrots für eine proteinreiche Ernährung zu erleichtern.

Die Erfindung löst dieses Problem durch ein Verfahren mit den Merkmalen des Anspruchs 1 und durch ein Lebensmittel mit den Merkmalen des Anspruchs 13. Hinsichtlich weiterer Ausgestaltungen und Merkmale der Erfindung wird auf die abhängigen Ansprüche 2 bis 12 und 14 bis 15 verwiesen.

Durch das erfindungsgemäße Verfahren ist es möglich, direkt aus dem Preßkuchen (Expeller) oder einem durch Zerkleinerung oder Ölextraktion erzeugten Pulver ohne den Umweg einer Proteinkonzentration oder -isolation ein in sich formstabiles, faserhaltiges Nahrungsmittel auszubilden. Es muß also keine chemische Aufspaltung des bereits existierenden Preßkuchens oder Pulvers und kein späteres Zusammensetzen zu einem Lebensmittel erfolgen. Mit dem Verfahren entsteht ein elastisches, faseriges und angenehm weiches Lebensmittel, das durch Aromen, Gewürze und ähnliches geschmacklich in vielfältiger Weise eingestellt werden kann und ggf. durch Konservierungsstoffe haltbar gemacht werden kann.

Insbesondere ist der Preßkuchen aus Rapssaaten gebildet, da Raps in großer Menge zur Verfügung steht und bei der Ölpressung als Beiprodukt derartiger Preßkuchen ohnehin anfällt und besonders vorteilhaft einer Weiterverwertung als Lebensmittel zugeführt wird.

Wenn günstig der Preßkuchen oder das Pulver aus vor der Pressung geschälten Rapssaaten gebildet ist, sind nahezu keine optisch störenden (dunklen) und sehr harten Schalenbestandteile im Preßkuchen enthalten, so daß derartige Bestandteile auch im fertigen Endprodukt nicht störend enthalten sein können Auch in der Schale enthaltene antinutrive Anteile wie etwa Wachse oder Tannine können so nahezu nicht bis in das als Endprodukt ausgegebene Lebensmittel gelangen.

Vorteilhaft kann das Material des Preßkuchens je nach Konsistenz zu einem Pulver vermahlen oder direkt in zumindest einen Extruder eingeleitet werden, so daß dort durch den Druck und die Reibung eine Erhitzung zu einem Kochprozeß und eine gleichzeitige Ausförderung stattfinden, so daß die Texturierung ohne weitere Maßnahmen automatisch in Förderrichtung stattfindet. Das durch Wasserzugabe feuchte Ausgangsprotein wird im Extruder bei hohem Druck und hoher Temperatur starken Scherkräften ausgesetzt, wodurch eine partielle Auffaltung und Streckung der globulären Proteine erfolgt, die sich anschließend in Fließrichtung ausrichten.

Alternativ wäre auch ein Spinnprozeß möglich, bei dem echte Fasern durch Pressen des Materials aus einer Spinndüse in die Koagulation auslösende Fällbäder gebildet werden.

Da ein Rapspreßkuchen oder entsprechendes Pulver je nach Sorte nur ca. 38 bis 40% an Protein enthält und für eine mechanische Stabilität des Endprodukts ein höherer Proteingehalt erforderlich sein kann, kann günstig das Material des Preßkuchens oder Pulvers vor Erhitzung mit einem weiteren proteinhaltigen Material versetzt werden, zum Beispiel Erbsenprotein. Auch andere pflanzliche Proteine, zum Beispiel Lupine, Sonnenblume oder andere oder auch tierische Proteine (etwa aus Eiern oder Fischmehl) können zur Steigerung des Proteingehalts auf 45 bis 50% des Volumens herangezogen werden und insbesondere in einem Mischer mit dem Preßkuchen oder gemahlenen Pulvers vermengt werden, so daß eine pulverartige, gleichmäßig vermischte Masse entsteht, die in den Extruder eingeleitet werden kann.

Auch ein Verzicht auf die Beigabe eines weiteren proteinhaltigen Materials kann möglich sein.

Das Extrudat bildet dann vorteilhaft als Vor-Ausgangsprodukt des Verfahrens einen faserhaltigen, in sich formstabilen und durch Zerschneiden oder Stanzen in Stücke zerteilbaren Strang.

Dieses Vor-Ausgangsprodukt kann durch Schneiden oder Stanzen portionierbar sein und durch Zugabe von Aromen, Gewürzen und anderen geschmacksbeeinflussenden Stoffen zu einem beispielsweise als Fleischersatz dienenden Endprodukt fertigstellt werden, das einzeln verpackt und gehandelt werden kann. Durch die Einfachheit des Verfahrens ist die Wertschöpfung sehr hoch.

Mit dem eingesetzten Extruder kann das Verfahren kontinuierlich oder quasikontinuierlich betrieben werden eine hohe Effektivität auch in der industriellen Nutzung und große Stückzahlen erzeugen.

Die Erfindung bildet auch ein neues Lebensmittel aus einem proteinhaltigen, faserhaltigen Festkörper, der aus zumindest 90% seines Volumens aus Raps gebildet ist. Ein solches Lebensmittel ist bisher unbekannt und für sich handelbar.

Für die gewünschte Stabilität und als Unterstützung im Herstellungsverfahren weist das Lebensmittel vorteilhaft einen angehobenen Proteingehalt auf, indem 5% bis 10% seines Volumens aus einem neben dem Hauptproteinspender Raps weiteren Protein, insbesondere einem pflanzlichen Protein, gebildet sind.

Ein solches Lebensmittel ist aufgrund seiner faserigen Konsistenz und der Möglichkeiten der Würzung und Aromatisierung problemlos als Fleischersatz nutzbar.

Weitere Vorteile und Merkmale der Erfindung ergeben sich aus in der Zeichnung dargestellten und nachfolgend beschriebenen Ausführungsbeispielen des Gegenstandes der Erfindung.

In der Zeichnung zeigt:
- Fig. 1: einen grobschematischen und beispielhaften Ablaufplan eines erfindungsgemäßen Verfahrens,
- Fig. 2: eine schematische Ansicht eines Preßkuchens, der als Ausgangsmaterial dienen kann,
- Fig. 3: eine schematische Ansicht eines faserhaltigen, texturierten Endprodukts,

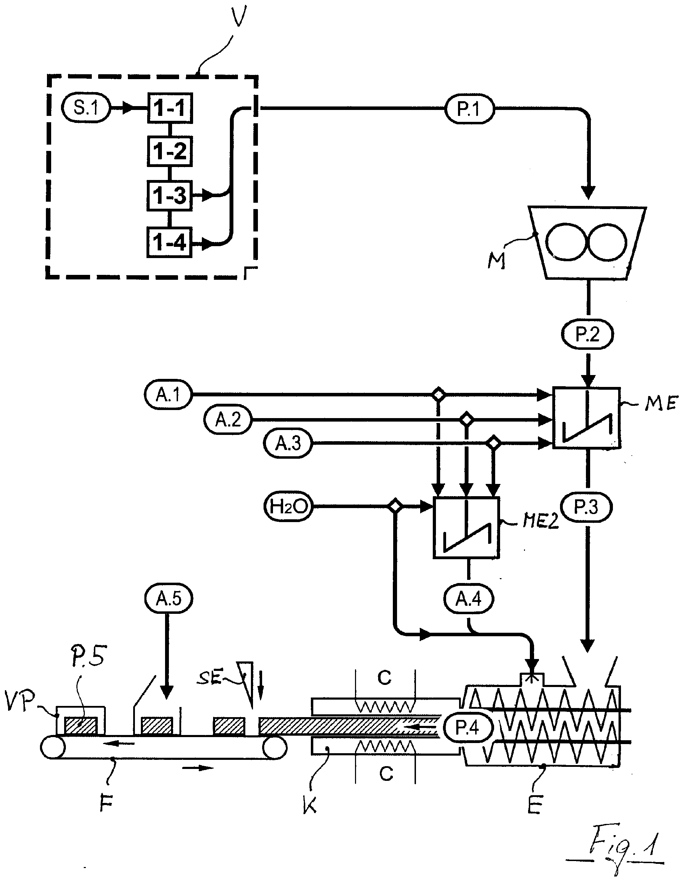

Gemäß dem in Figur 1 dargestellten Ablaufplan ist ein Verfahren dargestellt, an dessen Ende als Produkt P.5 ein Lebensmittel erhalten wird, das in Stücke portioniert ist und beispielsweise als Fleischersatz oder Fleischanalogon verwendet werden kann. Dieses Produkt P.5 ist auch ohne Proteinkonzentration oder -isolation hoch proteinhaltig und daher für die Ernährung sehr wertig.

Als Ausgangsprodukt S.1 für das Verfahren dienen ölhaltige Saaten S.1, wie etwa Senf, Crambe, Sonnenblume, Kürbiskerne, Hanf, Lein oder insbesondere Raps, die beispielsweise in einem Ölsaaten-Verarbeitungsprozeß V zunächst in Stufe 1-1 konditioniert werden, dann in der Stufe 1-2 einer Schälung unterzogen werden, ehe die Kerne - möglichst ohne Schalenanteile - in Stufe 1-3 ein- oder mehrfach gepreßt werden oder nachträglich durch ein geeignetes Verfahren die Schalen entfernt werden. Dabei wird insbesondere der gesamte Verarbeitungsprozeß V bei niedriger Temperatur (sog. Kaltpressung) durchgeführt, um eine Denaturierung der Eiweiße zu verhindern. Dies bedeutet, daß die Saat bei Raum- bzw. Umgebungstemperatur der Presse zugeführt wird, ohne eine vorherige hydrothermische Konditionierung. Üblicherweise liegt die Saatfeuchte bei ca. 6 bis 8 Prozent Wassergehalt und die resultierende Preßtemperatur bei einer Kaltpressung bei ca. 40 bis 60 Grad Celsius.

Als Stufe 1-4 kann sich eine Ölextraktion (wohlgemerkt: keine Protein-Extraktion) anschließen, die im verbleibenden Preßkuchen oder Pulver P.1 den Restölgehalt auf zum Beispiel ca. 1% senkt - von vorher ca. 8%, die nach der Pressung verbleiben. Aus der Stufe 1-3 oder 1-4 kann dann das Pulver oder der Preßkuchen P.1 für das weitere Verfahren erhalten werden.

In diesem weiteren Verfahren zur Bearbeitung eines Preßkuchens oder Pulvers P.1 aus Anteilen aus ölhaltigen Saaten wird das Material des Preßkuchens oder Pulvers P.1 einer Erhitzung und einer Texturierung zur Ausbildung eines faserhaltigen Nahrungsmittels A.5 - hier beispielhaft in einem Extruder E - unterzogen Im hier vorliegenden Beispiel ist der Preßkuchen oder das Pulver (das auch anders, als wie vor beschrieben, gebildet werden kann) aus Rapssaaten S.1 gebildet. Dieses enthält bei heute üblichen Rapssorten ca. 38% Protein, ca. 12% Fett und ca. 50% Kohlenhydrate im Volumen. Es sind jedoch bereits Rapssorten in der Erprobung, die einen höheren Proteingehalt aufweisen.

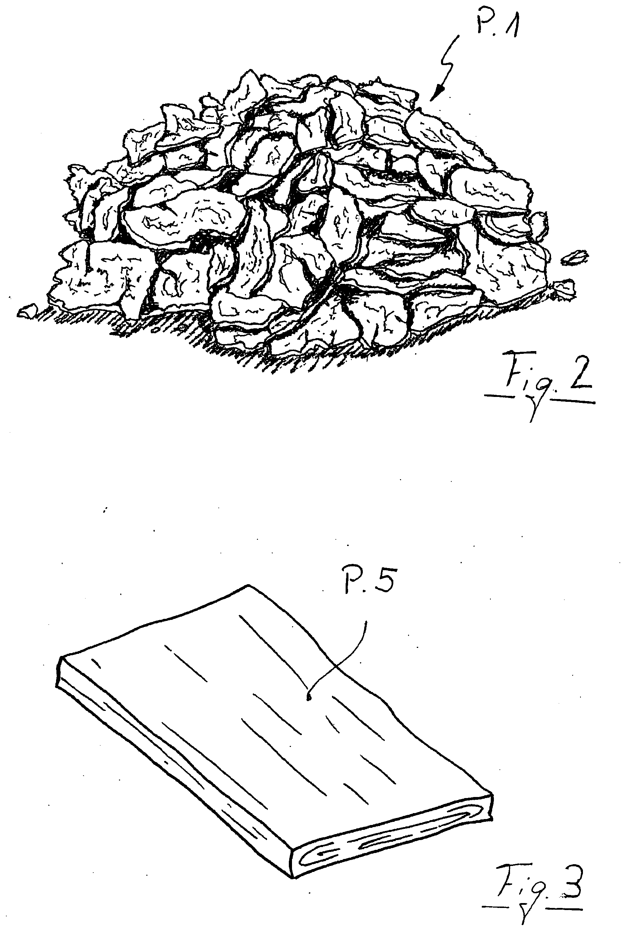

Sofern es sich bei dem Material P.1 um einen Preßkuchen aus unterschiedlich großen zusammenhängenden Stücken handelt, wie etwa in Figur 2 dargestellt ist, kann dieser noch in einem Mahlwerk M zu einem Mehl oder Pulver P.2 vermahlen werden. Daraus ergibt sich eine Partikelgröße von maximal 5,0 Millimetern Erstreckung. Die Vermahlung kann je nach Ausgangsmaterial P.1 auch verzichtbar sein.

Je nachdem, welchen Proteingehalt das Ausgangsmaterial P.1 aufweist, kann es zudem erforderlich sein, den Proteingehalt durch Zuführung eines weiteren Proteins A.1 anzuheben. Sofern eine solche Zugabe nötig ist, kann sie insbesondere in eine Mischeinheit ME gegeben werden, die das zugegebene Protein mit der Ausgangsmasse aus Preßkuchen oder Pulver P.1, ggf. nach einem weiteren Mahlen als Mehl P.2, gleichmäßig vermengt.

Als weiteres Protein kommen verschiedene pflanzliche oder auch tierische Proteine in Frage, beispielsweise Erbsenprotein. Auch andere pflanzliche Proteine, etwa aus Lupine, Sonnenblume, oder ähnlichem sind möglich. Zusätzlich oder alternativ kann auch Protein aus tierischen Quellen hinzugefügt werden, sofern kein rein veganes Produkt erzeugt werden soll, beispielsweise Ei, Molkepulver, Hühnereiweiß, Fischmehlpulver.... Die Zuführung kann je nach Ausbildung in flüssiger oder Feststoffgestalt, insbesondere pulveriger Form, erfolgen.

Unabhängig von der Quelle des zugeführten Proteins, kann mit der Zugabe der Proteingehalt in der so gemischten Masse P.3 auf ca. mindestens 45%, insbesondere bis über 50%, gesteigert werden, was der gleichmäßigen Optik und mechanischen Stabilität des am Ende gebildeten Produkts P.5 zugute kommt.

Ferner können in die Mischeinheit ME auch Aromen A.2 und/oder Konservierungsstoffe A.3 mit eingegeben werden - ebenfalls in flüssiger oder fester Form -, so daß die erhaltene gemischte Masse P.3 bereits ihre endgültige Zusammensetzung in homogener Verteilung erreicht haben kann.

Zusätzlich oder alternativ ist auch möglich, daß flüssige Zugaben von Protein A.1, von Aromen A.2 und/oder von Konservierungsstoffen A.3 vorab mit Wasser (H₂O) in einer weiteren Mischeinheit ME2 vermischt werden und dann als wäßrige Phase A.4 direkt in einen Extruder E eingeleitet und dort erst mit der Masse P.3 vermengt werden.

In beiden Fällen wird das Preßkuchenmehl P.3, das aus dem Material des Preßkuchens oder das Pulver P.1 hier in zumindest einen Extruder E eingeleitet. Der Extruder E kann ein Schnecken- oder Kolbenextruder sein, der zusätzlich beheizt sein kann. In dem Extruder E, der vorzugsweise ein Zwei-Schnecken-Extruder ist und viel Energie in das Material einleiten kann, wird die Ausgangsmasse P.3 durchmengt und erwärmt. Die Zuführung und Untermengung von Wasser oder der oben beschriebenen wäßrigen Phase A.4 mit Additiven (zum Beispiel Protein, Aromen und/oder Konservierungsstoffen) führt unter der hohen Temperatur und Druck zu einem Umwandlungsprozeß insbesondere der Proteinfraktion als Bestandteil des Raps-Preßkuchenmehls P.3. In diesem Verfahrensschritt, der auch als "High moisture extrusion cooking" bekannt ist, findet ein Kochen des Materials unter gleichzeitiger Faserausbildung (Texturierung) statt. Die Proteine quellen auf und vernetzen. Das so gebildete Texturat P.4 kann durch eine Schlitzdüse mit geeigneter Höhe ausgepreßt werden.

Dem Extruder E ist in Förderrichtung eine Kühleinheit K nachgeschaltet, in dem das Texturat P.4 einer Schnellkühlung C ausgesetzt wird. Dadurch entsteht als Vor-Ausgangsprodukt des Verfahrens ein faserhaltiger, in sich formstabiler und durch Schneiden in Stücke zerteilbarer Strang. Dies ist ein Preßkuchen-Texturat P.4 mit einer ausgerichteten faserartigen, elastischen Struktur. Dieses zunächst strangförmige Texturat P.4 kann durch Schneiden oder Stanzen durch eine oder mehrere Schneideinheiten SE portionierbar sein und dann auf einen Förderer F geleitet werden. Eine automatisierte Verpackung VP des fertig portionierten und formstabilen Lebensmittels P.5 ist dabei ebenfalls möglich. Vorher können dem Produkt P.5 noch weitere Zutaten und/oder Additive A.5, wie etwa Aromen, Gewürze und andere geschmacksbeeinflussende Stoffe, wie etwa eine Soße oder eine Kräuterkruste, zugeführt werden. Das in handlichen Stücken vorliegende Produkt kann so zu einem als Fleischersatz dienenden Endprodukt fertigstellbar sein. Sowohl Form, Haptik als auch Geschmack können zum Beispiel nach Art eines Schnitzels ausgeführt sein.

Das Herstellungsverfahren kann auch bei Änderung von Details vollständig ohne eine Proteinisolation oder eine Proteinkonzentration durchgeführt werden. Es entstehen auch keine Abwässer, sondern das direkt oder indirekt zugeführte Wasser H₂O wird vollständig in das Produkt P.5 eingebaut.

Für eine hohe Effektivität kann das Verfahren kontinuierlich oder quasikontinuierlich betrieben.

Das Endprodukt P.5, das auch über abweichende Verfahrensschritte hergestellt werden kann bildet so ein bisher unbekanntes Lebensmittel aus einem proteinhaltigen, faserhaltigen Festkörper, der hier zu zumindest 90% seines Volumens aus Raps gebildet ist. Auch eine Bio-Qualität läßt sich dabei einfach realisieren.

Dabei sind nur ca. 5% bis 10% seines Volumens aus einem weiteren Protein, insbesondere einem pflanzlichen Protein, gebildet, die weiteren Proteine hier durch Rapsprotein.

Dennoch ist durch die geschmacksbildenden Stoffe das Lebensmittel als Fleischersatz nutzbar.

Insgesamt wird daher der proteinhaltige Rapskuchen P.1 nicht erst zerlegt und chemisch verändert, sondern es wird allenfalls mit weiterem Protein A.1 versetzt, so daß der Proteingehalt erhöht wird, und dann direkt und nur mit physikalischen Prozessen in ein faserhaltiges Lebensmittel P.5 umgewandelt.

### Bezugszeichenliste:

- S.1: Ölhaltige Saaten,
- V: Ölsaaten-Verarbeitungsverfahren,
- 1-1: Konditionierung,
- 1-2: Schälung,
- 1-3: Pressung,
- 1-4: Entölung,
- P.1: Pulver oder Preßkuchen,
- M: Mahlwerk
- P.2: vermahlenes Mehl oder Pulver,
- A.1: Protein,
- A.2: Aromen,
- A.3: Konservierungsstoffe,
- ME: Mischeinheit,
- P3: gemischte Masse,
- ME2: zweite Mischeinheit,
- H₂O: Wasser,
- A.4: wäßrige Phase,
- E: Extruder,
- P.4: Preßkuchen-Texturat,
- K: Kühleinrichtung,
- C: Cooling,
- SE: Schneidelemente,
- P.5: Lebensmittel (Produkt),
- VP: Verpackung

## Patentansprüche

1. Verfahren zur Bearbeitung eines Preßkuchens und/oder Extraktionsschrots und/oder Pulvers (P.1) aus Anteilen aus ölhaltigen Saaten (S.1) wie etwa Senf, Crambe, Kürbiskerne, Sesam, Hanf, Lein, Sonnenblume oder Raps,
**dadurch gekennzeichnet,**
**daß** das Material des Preßkuchens oder Pulvers (P.1) einer Erhitzung und einer Texturierung zur Ausbildung eines faserhaltigen Nahrungsmittels (P.5) unterzogen wird.

2. Verfahren nach Anspruch 1,
**dadurch gekennzeichnet,**
**daß** der Preßkuchen, der Schrot und/oder das Pulver (P.1) aus Rapssaaten gebildet ist.

3. Verfahren nach Anspruch 2,
**dadurch gekennzeichnet,**
**daß** der Preßkuchen, Schrot und/oder das Pulver (P.1) aus vor einer Pressung (1-3) geschälten Rapssaaten (S.1) gebildet ist.

4. Verfahren nach einem der Ansprüche 1 bis 3,
**dadurch gekennzeichnet,**
**daß** das Material des Preßkuchens oder das Pulver (P.1) in zumindest einen Extruder (E) eingeleitet wird.

5. Verfahren nach Anspruch 4,
**dadurch gekennzeichnet,**
**daß** das Material des Preßkuchens oder Pulvers (P.1) in dem Extruder (E) einem Kochprozeß und einer Texturierung unterzogen wird.

6. Verfahren nach einem der Ansprüche 1 bis 5,
**dadurch gekennzeichnet,**
**daß** das Material des Preßkuchens oder Pulvers (P.1) vor Erhitzung mit einem weiteren proteinhaltigen Material (A.1) versetzt wird.

7. Verfahren nach Anspruch 6,
**dadurch gekennzeichnet,**
**daß** die Zusammensetzung aus dem Material des Preßkuchens (P.1) und dem weiteren proteinhaltigen Material (A.1) eine Mischung mit einem Proteingehalt von zumindest 45%, insbesondere von zumindest 50%, ergibt.

8. Verfahren nach einem der Ansprüche 6 oder 7,
**dadurch gekennzeichnet,**
**daß** als weiteres Protein (A.1) Erbsprotein zugeführt wird.

9. Verfahren nach einem der Ansprüche 1 bis 8,
**dadurch gekennzeichnet,**
**daß** das Verfahren ohne eine Proteinisolation oder eine Proteinkonzentration durchgeführt wird.

10. Verfahren nach einem der Ansprüche 1 bis 9,
**dadurch gekennzeichnet,**
**daß** das Vor-Endprodukt (P.4) des Verfahrens ein faserhaltiger, in sich formstabiler und durch Schneiden in Stücke zerteilbarer Strang ist.

11. Verfahren nach Anspruch 9,
**dadurch gekennzeichnet,**
**daß** das Vor-Endprodukt durch Schneiden oder Stanzen (SE) portionierbar ist und durch Zugabe von Aromen, Gewürzen und anderen geschmacksbeeinflussenden Stoffen zu einem als Fleischersatz dienenden Endprodukt (P.5) fertigstellbar ist.

12. Verfahren nach einem der Ansprüche 1 bis 11,
**dadurch gekennzeichnet,**
**daß** das Verfahren kontinuierlich oder quasikontinuierlich betrieben wird.

13. Lebensmittel (P.5) aus einem proteinhaltigen, faserhaltigen Festkörper, der aus zumindest 90% seines Volumens aus Raps gebildet ist.

14. Lebensmittel (P.5) nach Anspruch 13,
**dadurch gekennzeichnet,**
**daß** 5% bis 10% seines Volumens aus zumindest einem weiteren Protein (A.1), insbesondere einem pflanzlichen Protein, gebildet sind.

15. Lebensmittel (P.5) nach einem der Ansprüche 13 oder 14,
**dadurch gekennzeichnet,**
**daß** das Lebensmittel (P.5) als Fleischersatz nutzbar ist.
